# EUROPÄISCHE PATENTSCHRIFT

(11) **EP 2 210 365 B1**
(45) Veröffentlichungstag und Bekanntmachung des Hinweises auf die Patenterteilung: **18.07.2018**
(21) Anmeldenummer: 08838531.5
(22) Anmeldetag: 08.10.2008
(51) Int. Cl.: H04L 12/12, G05B 19/418, H04L 12/40, H04W 52/02

(54) **ENERGIESPARENDER BETRIEB EINER DRAHTGEBUNDENEN KOMMUNIKATIONS-SCHNITTSTELLE EINES FELDGERÄTES**
ENERGY-SAVING OPERATION OF A HARD-WIRED COMMUNICATION INTERFACE ON A FIELD DEVICE
FONCTIONNEMENT ÉCONOME EN ÉNERGIE D'UNE INTERFACE DE COMMUNICATION FILAIRE D'UN APPAREIL DE TERRAIN

(30) Priorität: 09.10.2007 DE 102007048476
(43) Veröffentlichungstag der Anmeldung: 28.07.2010
(73) Patentinhaber: Endress+Hauser Process Solutions AG, 4153 Reinach (CH)
(72) Erfinder: SEILER, Christian, 79424 Auggen (DE)
(74) Vertreter: Andres, Angelika Maria
(86) Internationale Anmeldenummer: PCT/EP2008/063470
(87) Internationale Veröffentlichungsnummer: WO 2009/047268

(56) Entgegenhaltungen:
- WO-A1-92/03004
- DE-A1-102006 009 979
- US-A1- 2006 116 102

## Beschreibung

Die vorliegende Erfindung betrifft ein Feldgerät der Prozessautomatisierungstechnik gemäß dem Oberbegriff des Anspruchs 1 sowie ein Verfahren zum Betreiben eines Feldgerätes der Prozessautomatisierungstechnik gemäß dem Oberbegriff des Anspruchs 9.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotential-messgeräte, Leitfähigkeitsmessgeräte, etc., welche die entsprechenden Prozess-variablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrlei-tungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Neben den oberhalb genannten Sensoren und Aktoren werden als Feldgeräte allgemein auch solche Einheiten bezeichnet, die direkt an einem Feldbus angeschlossen sind und zur Kommunikation mit den übergeordneten Einheiten dienen (z.B. Remote I/Os, Gateways, Linking Devices, Wireless Adapters). Eine Viel-zahl solcher Feldgeräte wird von der Firma Endress + Hauser hergestellt und vertrie-ben.

In modernen Industrieanlagen sind Feldgeräte in der Regel über Bussysteme (Profi-bus®, Foundation® Fieldbus, HART®, etc.) mit übergeordneten Einheiten verbunden. Nor-malerweise handelt es sich bei den übergeordneten Einheiten um Leitsysteme bzw. Steuereinheiten, wie beispielsweise SPS (speicherprogrammierbare Steuerung) oder PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfigurierung und Parametrierung von Feldgeräten sowie zur Ansteuerung von Aktoren.

Neben einer drahtgebundenen Datenübertragung zwischen den Feldgeräten und der übergeordneten Einheit besteht auch die Möglichkeit einer drahtlosen (wireless) Datenübertragung. Insbesondere in den Bussystemen Profibus®, Foundation® Fieldbus und HART® ist eine drahtlose Datenübertragung über Funk spezifiziert. Ferner sind Funknetzwerke für Sensoren in dem Standard IEEE 802.15.4 näher spezifiziert. Zur Realisierung einer drahtlosen Datenübertragung sind neuere Feldgeräte, insbesondere Sensoren und Aktoren, teilweise als Funk-Feldgeräte ausgebildet. Diese weisen in der Regel eine Funkeinheit und eine Stromquelle als integralen Bestandteil auf. Dabei können die Funkeinheit und die Sromquelle in dem Feldgerät selbst oder in einem dauerhaft an dem Feldgerät angeschlossenen Funkmodul vorgesehen sein. Durch die Stromquelle wird eine autarke Energieversorgung des Feldgerätes ermöglicht.

Daneben besteht die Möglichkeit, Feldgeräte ohne Funkeinheit, insbesondere Sensoren und Aktoren, durch Anschluss eines Wireless Adapters, der eine Funkeinheit aufweist, zu einem Funk-Feldgerät aufzurüsten. Beispielsweise ist in den Druckschriften WO 2005/103851 A1 und US 2006/116102 A1 sowie DE 10 2006 009979 A1 solch ein Wireless Adapter beschrieben. Der Wireless Adapter wird in der Regel an eine Feldbus-Kommunikationsschnittstelle des Feldgerätes (insbesondere eines Sensors oder Aktors) lösbar angeschlossen. Über die Feldbus-Kommuni-kationsschnittstelle kann das Feldgerät (insbesondere ein Sensor oder Aktor) die über das Bussystem zu übermittelnden Daten an den Wireless Adapter senden, der diese dann über Funk an den Zielort übermittelt. Umgekehrt kann der Wireless Adapter über Funk Daten empfangen und über die Feldbus-Kommuni-kationsschnittstelle an das Feldgerät (insbesondere an einen Sensor oder Aktor) weiterleiten. Die Versorgung des Feldgerätes (insbesondere des Sensors oder Aktors) mit elektrischer Leistung erfolgt in der Regel über eine Stromquelle des Wireless Adapters.

Bei solchen Funk-Feldgeräten und Wireless Adaptern wird die Kommunikation (beispielsweise mit einer übergeordneten Einheit) in der Regel über die drahtlose Schnittstelle des Funk-Feldgerätes bzw. des Wireless Adapters abgewickelt. Zusätzlich weisen solche Funk-Feldgeräte bzw. Wireless Adapter in der Regel eine drahtgebundene Kommunikationsschnittstelle auf. Beispielsweise ist in dem HART®-Standard vorgesehen, dass Funk-Feldgeräte neben einer drahtlosen Schnittstelle auch eine drahtgebundene Kommunikationsschnittstelle aufweisen müssen. Über solch eine drahtgebundene Kommunikationsschnittstelle ist beispielsweise vor Ort eine Konfiguration des Funk-Feldgerätes bzw. des Wireless Adapters über eine Service- und/oder Bedieneinheit, wie beispielsweise einen Handheld Communicator, die/der an der drahtgebundenen Kommunikationsschnittstelle angeschlossen wird, möglich. Ferner kann die drahtgebundene Kommunikationsschnittstelle als Feldbus-Kommunikations-schnittstelle ausgebildet sein, so dass die Kommunikation darüber entsprechend einem Bussystem, wie beispielsweise entsprechend einem der standardisierten Bussysteme Profibus®, Foundation® Fieldbus oder HART®, abgewickelt wird. Über solch eine Feldbus-Kommuni-kationsschnittstelle kann das Funk-Feldgerät bzw. der Wireless Adapter auch an einen entsprechenden drahtgebundenen Feldbus angeschlossen werden.

Die Stromquelle eines Wireless Adapters oder eines Funk-Feldgerätes wird beispielsweise durch eine in dem Wireless Adapter bzw. dem Funk-Feldgerät vorgesehene Batterie, Brennstoffzelle, und/oder Akku, etc. gebildet. Insbesondere dann, wenn ein Feldgerät als Funk-Feldgerät oder als Wireless Adapter ausgebildet ist und über eine autarke Stromquelle mit elektrischer Leistung versorgt wird, oder wenn ein Feldgerät (insbesondere ein Sensor oder ein Aktor) von der Stromquelle eines daran angeschlossenen Wireless Adapters mit elektrischer Leistung versorgt wird, sollte der Leistungsverbrauch des betreffenden Feldgerätes minimiert werden. Dadurch kann die Lebensdauer der jeweiligen Stromquelle verlängert und dementsprechend die Anzahl der durchzuführenden Instandhaltungsarbeiten reduziert werden. Auch bei herkömmlichen Feldgeräten, die über eine drahtgebundene Kommunikationsschnittstelle (Feldbus-Kommunikationsschnittstelle) an einem Feldbus angeschlossen sind, wird aus Kosten- und Umweltgründen eine Reduzierung des Energieverbrauchs angestrebt.

In den Zeiten, in denen ein Feldgerät keine Aktion ausführen muss, insbesondere in den Zeiträumen zwischen Messwertanfragen, Konfigurationsvorgängen und/oder Befehlen zum Durchführen einer bestimmten Aktion, wird das betreffende Feldgerät in der Regel in einem Standby-Modus betrieben. Insbesondere die oberhalb beschriebenen drahtlosen Funk-Feldgeräte und Wireless Adapter haben im Standby-Modus einen sehr niedrigen Leistungsverbrauch. Sie benötigen in der Regel nur wenige µA, insbesondere weniger als 10 µA, Versorgungsstrom. Der oberhalb beschriebenen drahtgebundenen Kommunikationsschnittstelle ist in der Gerätearchitektur eine Funktionseinheit zugeordnet, durch die das Senden und/oder Empfangen von digitalen Signalen über die drahtgebundene Kommunikationsschnittstelle durchgeführt wird. Der Leistungsverbrauch solch einer Funktionseinheit ist deutlich höher als der Leistungsverbrauch eines drahtlosen Funk-Feldgerätes oder Wireless Adapters im Standby-Modus. Wird die Funktionseinheit beispielsweise durch einen ASIC (engl.: application specific integrated circuit; deutsch: anwendungsspezifische integrierte Schaltung) gebildet, so benötigt dieser in der Regel einen Versorgungsstrom von mehr als 100 µA.

Demgemäß besteht die Aufgabe der vorliegenden Erfindung darin, ein Feldgerät sowie ein Verfahren zum Betreiben eines Feldgerätes bereitzustellen, das eine permanente Verfügbarkeit der drahtgebundenen Kommunikationsschnittstelle und gleichzeitig eine Betriebsweise mit niedrigem Leistungsverbrauch ermöglicht.

Die Aufgabe wird durch ein Feldgerät gemäß Anspruch 1 sowie durch ein Verfahren gemäß Anspruch 8 gelöst. Vorteilhafte Weiterbildungen der Erfindung sind in den Unteransprüchen angegeben.

Gemäß der vorliegenden Erfindung wird ein Feldgerät der Prozessautomatisierungstechnik, insbesondere ein Sensor, ein Aktor und/oder ein Wireless Adapter, mit einer drahtgebundenen Kommunikationsschnittstelle und mit einer der

Kommunikationsschnittstelle zugeordneten Funktionseinheit bereitgestellt. Die Funktionseinheit ist derart ausgebildet, dass sie das Senden und/oder Empfangen von digitalen Signalen über die Kommunikationsschnittstelle durchführt. Das Feldgerät ist derart ausgebildet, dass die Funktionseinheit getaktet betreibbar ist, wobei sich in dem getakteten Betrieb jeweils aktivierte Zeiträume, in denen die Funktionseinheit aktiviert ist, mit ausgeschalteten Zeiträumen, in denen die Funktionseinheit ausgeschaltet ist, abwechseln.

Das Feldgerät kann insbesondere als Sensor, als Aktor oder als Wireless Adapter, der beispielsweise an einen Sensor oder Aktor (oder allgemein an ein Feldgerät) anschließbar ist, oder auch als Remote I/O, Gateway, oder Linking Device ausgebildet sein. Bei der nachfolgenden Erläuterung der Patentansprüche wird dementsprechend mit "Feldgerät" allgemein auch auf diese Alternativen Bezug genommen.

Bei dem Senden von digitalen Signalen über die Kommunikationsschnittstelle wandelt die Funktionseinheit insbesondere erhaltene digitale Daten (z.B. einen Bitstream), die beispielsweise von einer Steuereinheit des Feldgerätes erhalten werden, in entsprechende physikalische, über die Kommunikationsschnittstelle zu übertragende Signale um. Da diese physikalischen, über die Kommunikationsschnittstelle zu übertragenden Signale digitale Daten darstellen, werden sie als digitale Signale bezeichnet. Beim Empfangen von digitalen Signalen über die Kommunikationsschnittstelle, die beispielsweise von einer daran angeschlossenen Service- und/oder Bedieneinheit erhalten werden, wandelt die Funktionseinheit diese in digitale Daten um. Erfolgt die Kommunikation über die Kommunikationsschnittstelle beispielsweise gemäß dem HART®-Standard, so werden beim Senden durch die Funktionseinheit einem Stromsignal (4-20 mA Stromsignal) digitale Signale gemäß dem FSK (Frequency Shift Keying) Standard überlagert, während die Funktionseinheit beim Empfangen die digitalen Signale entsprechend dem FSK Standard in digitale Daten umwandelt. Bei dem Profibus®-Standard erfolgt das Senden und/oder Empfangen von digitalen Signalen über die Kommunikationsschnittstelle durch die Funktionseinheit in der Regel gemäß dem RS 485 Standard (vorwiegend bei PROFIBUS® DP und PROFIBUS® FMS).

Gemäß der vorliegenden Erfindung wechseln sich in dem getakteten Betrieb der Funktionseinheit jeweils aktivierte Zeiträume und ausgeschaltete Zeiträume ab. Während der ausgeschalteten Zeiträume ist die Funktionseinheit vorzugsweise vollständig ausgeschaltet und benötigt dementsprechend keine elektrische Leistung. Dadurch kann der Leistungsverbrauch reduziert werden. Je nach Verhältnis der Länge der ausgeschalteten Zeiträume zu den aktivierten Zeiträumen kann der Leistungsverbrauch um 99% oder mehr im Vergleich zu einem Dauerbetrieb der Funktionseinheit reduziert werden. Während der aktivierten Zeiträume kann die Funktionseinheit digitale Signale empfangen (und senden), so dass die Funktionseinheit während dieser Zeiten für eine Kommunikation über die Kommunikationsschnittstelle verfügbar ist. Dadurch, dass die Funktionseinheit getaktet betrieben wird, wird eine permanente Verfügbarkeit der Kommunikationsschnittstelle bei niedrigem Leistungsverbrauch erzielt.

Gemäß der vorliegenden Erfindung wird ferner ein Verfahren zum Betreiben eines Feldgerätes der Prozessautomatisierungstechnik, insbesondere eines Sensors, eines Aktors und/oder eines Wireless Adapters, bereitgestellt. Das Feldgerät weist eine drahtgebundene Kommunikationsschnittstelle und eine der Kommunikationsschnittstelle zugeordnete Funktionseinheit auf, wobei durch die Funktionseinheit das Senden und/oder Empfangen von digitalen Signalen über die Kommunikationsschnittstelle durchgeführt wird. Die Funktionseinheit wird in einem getakteten Betrieb betrieben, wobei sich in dem getakteten Betrieb jeweils aktivierte Zeiträume, in denen die Funktionseinheit aktiviert ist, mit ausgeschalteten Zeiträumen, in denen die Funktionseinheit ausgeschaltet ist, abwechseln.

Die oberhalb in Bezug auf das erfindungsgemäße Feldgerät erläuterten Vorteile und Merkmale sind in entsprechender Weise auch bei dem erfindungsgemäßen Verfahren realisierbar. Die nachfolgend erläuterten Weiberbildungen und Vorteile sowie die in den abhängigen Patentansprüchen angegebenen Weiterbildungen sind sowohl bei dem erfindungsgemäßen Feldgerät als auch bei dem erfindungsgemäßen Verfahren realisierbar.

Gemäß einer vorteilhaften Weiterbildung der Erfindung folgen die aktivierten Zeiträume und die ausgeschalteten Zeiträume periodisch aufeinander. Dies bedeutet, dass die aktivierten Zeiträume jeweils gleich lang sind und dass die ausgeschalteten Zeiträume jeweils gleich lang sind, so dass sich eine periodische Abfolge ergibt. Vorzugsweise sind die aktivierten Zeiträume kürzer als die ausgeschalteten Zeiträume, so dass der Leistungsverbrauch effektiv reduziert werden kann.

Ferner wird gemäß einer vorteilhaften Weiterbildung die Funktionseinheit zumindest dann in dem getakteten Betrieb betrieben, wenn das Feldgerät in einem Standby-Modus betrieben wird. Dadurch kann während der Zeiten, in denen das Feldgerät keine Messwertanfrage abarbeiten oder eine anderweitige Aktion ausführen muss, sowohl das Feldgerät in einem energiesparenden Standby-Modus als auch die Funktionseinheit in dem energiesparenden getakteten Betrieb betrieben werden. Dadurch wird der Leistungsverbrauch weiter reduziert.

Wenn an der Funktionseinheit ein digitales Signal erkannt wird, wird das Feldgerät in einen aktiven Betrieb umgeschaltet. Vorzugsweise wird in diesem Fall auch die Funktionseinheit dauerhaft aktiviert. Zum Erfassen eines an der Kommunikationsschnittstelle ankommenden digitalen Signals weist die Funktionseinheit vorzugsweise eine Carrier Detect Logic (deutsch: Trägererkennungslogik) auf. Diese erkennt beispielsweise, ob ein gültiges, Informationen enthaltendes digitales Signal empfangen wird und unterscheidet dieses von einem Rauschen. Das digitale Signal wird dabei in der Regel von einem externen Gerät, wie beispielsweise von einer an der Kommunikationsschnittstelle angeschlossenen Service- und/oder Bedieneinheit oder von einer übergeordneten Einheit, die über einen Feldbus mit der Kommunikationsschnittstelle verbunden ist, empfangen. Falls eine Steuereinheit (bspw. eine CPU oder ein Mikroprozessor) des Feldgerätes entsprechend ausgebildet ist (insbesondere bei Foundation® Fieldbus), kann auch durch diese Steuereinheit eine Kommunikation initiiert werden und die Funktionseinheit daraufhin dauerhaft aktiviert werden. Durch Umschalten des Feldgerätes in einen aktiven Betrieb kann dieses insbesondere bei Erhalt einer Messwertanfrage oder eines Befehls eine entsprechende Messung durchführen bzw. eine dem Befehl entsprechende Aktion ausführen. Dadurch, dass die Funktionseinheit dauerhaft aktiviert wird, kann sie erhaltene digitale Signale vollständig empfangen und die Kommunikation durchführen. Vorzugsweise bleibt die Funktionseinheit so lange in einem dauerhaft aktivierten Zustand, bis der Kommunikationsvorgang vollständig abgeschlossen ist. Alternativ kann auch vorgesehen sein, dass die Funktionseinheit für eine vorbestimmte Zeit in dem dauerhaft aktivierten Zustand bleibt. Anschließend wird die Funktionseinheit vorzugsweise wieder in den getakteten Betrieb umgeschaltet.

Ein an der Kommunikationsschnittstelle angeschlossenes Gerät und/oder eine in dem Feldgerät vorgesehene Steuereinheit sendet vor Durchführung einer Kommunikation ein vorbestimmtes Aufwecksignal einer Länge, die vorzugsweise länger als ein ausgeschalteter Zeitraum der Funktionseinheit ist. Dadurch wird sichergestellt, dass die Funktionseinheit das Aufwecksignal während eines aktivierten Zeitraumes empfängt und damit die weiteren erforderlichen Schritte zur Durchführung der Kommunikation vornehmen kann. Vorzugsweise hat das Aufwecksignal eine vorbestimmte Struktur, wie beispielsweise ein Signal, das einem Bitstream von abwechselnden "1" und "0" entspricht oder das eine vorbestimmte, konstante Frequenz aufweist. Alternativ zu einem Aufwecksignal einer bestimmten Länge kann auch mehrmals ein Aufwecksignal gesendet werden. Sowohl bei einem fortdauernden als auch bei einem wiederholten Aufwecksignal kann vorgesehen werden, dass dieses gesendet wird, bis von der Funktionseinheit der Erhalt des Aufwecksignals bestätigt wird.

Gemäß einer vorteilhaften Weiterbildung ist vorgesehen, dass die Kommunikationsschnittstelle durch eine Feldbus-Kommunikationsschnittstelle gebildet wird. Demgemäß erfolgt eine Kommunikation über die Feldbus-Kommunikationsschnittstelle digital gemäß dem jeweiligen Feldbussystem. Vorzugsweise wird als Bussystem eines der folgenden, standardisierten Bussysteme Profibus®, Foundation®-Fieldbus oder HART® eingesetzt. Das Bussystem HART® ist aufgrund seiner häufigen Anwendung und aufgrund seiner guten Eignung für den Einsatz in Funknetzwerken bevorzugt. Ferner ist gemäß einer vorteilhaften Weiterbildung vorgesehen, dass an der Kommunikationsschnittstelle eine Service- und/oder Bedieneinheit anschließbar ist und zwischen der Service- und/oder Bedieneinheit und dem Feldgerät über die Kommunikationsschnittstelle eine Kommunikation durchführbar ist. Eine Service- und/oder Bedieneinheit kann beispielsweise durch einen Handheld Communicator (in der Hand tragbares Parametrierungs- und/oder Konfigurationsgerät), der von verschiedenen Feldgeräte-Herstellern angeboten wird und über den eine Konfiguration und/oder Parametrierung von Feldgeräten vor Ort durchgeführt werden kann, gebildet werden. Ferner kann solch eine Service- und/oder Bedieneinheit auch durch einen Laptop oder Computer gebildet werden, der über eine entsprechende Schnittstelle an der Kommunikationsschnittstelle angeschlossen wird. Vorzugsweise erfolgt die Kommunikation auch in dem Fall, in dem die Kommunikationsschnittstelle zum Anschluss einer Service- und/oder Bedieneinheit ausgebildet ist, gemäß einem Feldbus-Standard. Alternativ kann auch vorgesehen sein, dass die Kommunikationsschnittstelle ausschließlich als Service-Kommunikationsschnittstelle ausgebildet ist (proprietäre Schnittstelle) und nur eine herstellerspezifische Kommunikation ermöglicht.

Gemäß einer vorteilhaften Weiterbildung ist die Funktionseinheit auf den Schichten 1 und 2 des OSI-Referenzmodells (Open Systems Interconnection Referenzmodell), vorzugsweise ausschließlich auf der Schicht 1 des OSI-Referenzmodells, implementiert. Gemäß einer vorteilhaften Weiterbildung ist die Funktionseinheit als separate Schaltung realisiert, wobei hierzu insbesondere ein ASIC (engl.: application specific integrated circuit; deutsch: anwendungsspezifische integrierte Schaltung), ein FPGA (engl.: field programmable gate array; deutsch: frei programmierbare logische Anordnung) oder ein FPLA (engl.: field programmable logic array; deutsch: frei programmierbare logische Anordnung) geeignet sind. FPGAs (und auch FPLAs) beinhalten programmierbare logische Komponenten und programmierbare Verbindungsleitungen mit steuerbaren Schaltern zwischen diesen Komponenten. Die tatsächliche Funktion solcher FPGAs (und FPLAs) wird durch Programmierung festgelegt, so dass gleiche FPGAs durch entsprechende Programmierung für unterschiedliche Funktionen und Anwendungen eingesetzt werden können. Alternativ zur Realisierung der Funktionseinheit als separate Schaltung kann diese auch in die Steuereinheit des Feldgerätes integriert sein.

Gemäß einer vorteilhaften Weiterbildung kommuniziert das Feldgerät über eine drahtlose Verbindung, vorzugsweise über Funk, mit einer übergeordneten Einheit. Insbesondere kann das Feldgerät zusätzlich eine drahtlose (wireless) Feldbus-Kommunikationsschnittstelle aufweisen, wobei die drahtlose Feldbus-Kommunikationsschnittstelle vorzugsweise gemäß dem Profibus®-Standard, dem Foundation®-Fieldbus-Standard oder gemäß dem HART®-Standard ausgebildet ist. Wie im einleitenden Teil der Beschreibung erläutert wird, kann das Feldgerät hierbei sowohl selbst solch eine drahtlose Feldbus-Kommunikationsschnittstelle aufweisen oder solch eine drahtlose Feldbus-Kommunikationsschnittstelle kann an einem Wireless Adapter vorgesehen sein, der (in der Regel über eine drahtgebundene Schnittstelle) an dem Feldgerät angeschlossen ist. Vorzugsweise wird das Feldgerät autark mit elektrischer Leistung versorgt. Insbesondere in diesem Fall ist die durch das erfindungsgemäße Feldgerät und Verfahren erzielte Reduzierung im Leistungsverbrauch vorteilhaft. Eine solche autarke Stromquelle zur Versorgung des Feldgerätes kann dabei in dem Feldgerät selbst vorgesehen sein. Wird ein herkömmliches Feldgerät (insbesondere ein Sensor oder ein Aktor) durch Anschluss eines Wireless Adapters zu einem Funk-Feldgerät aufgerüstet, so kann die autarke Stromquelle für das Feldgerät (insbesondere für den Sensor oder Aktor) auch in dem Wireless Adapter vorgesehen sein.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:
Fig. 1: eine schematische Darstellung eines Funknetzwerkes mit mehreren Feldgeräten;
Fig. 2: ein schematisches Blockschaltbild eines Funk-Feldgerätes gemäß einer ersten Ausführungsform der Erfindung.

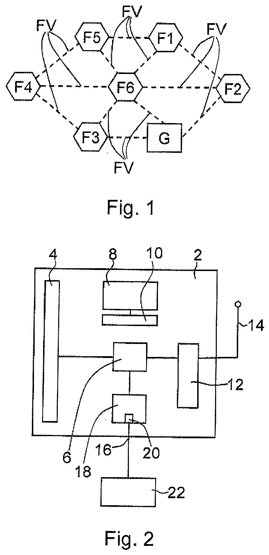

In Fig. 1 ist ein Funknetzwerk mit mehreren Feldgeräten F1, F2, ..., F6, die jeweils als Funk-Feldgeräte ausgebildet sind, und einem Gateway G dargestellt. Die Feldgeräte F1, F2, ..., F6 stehen untereinander und mit dem Gateway G jeweils in Funkverbindung FV, was in Fig. 1 durch die gestrichelten Linien dargestellt ist. Dadurch, dass die Feldgeräte F1, F2, ..., F6 und das Gateway G jeweils über mehrere Funkverbindungen FV in Verbindung stehen, kann selbst bei einem Ausfall einer der Funkverbindungen FV die Kommunikation über eine der anderen Funkverbindungen FV aufrechterhalten werden. Als Funkübertragungstechnologien für die Funkverbindungen FV sind beispielsweise Frequency Hopping Spread Spectrum (FHSS) oder Direct Sequence Spread Spectrum (DSSS) Verfahren geeignet. Aufgrund der benötigten geringen Sendeleistungen ist auch die Ultrawideband-Technologie (UWB) sehr gut geeignet. Bei dem Gateway G kann es sich um eine Fernübertragungseinheit, z.B. das Produkt "Fieldgate" der Firma Endress + Hauser, handeln. In diesem Fall kann das Gateway G weltweit zum Beispiel via Internet, GSM oder Festnetz mit einer (nicht dargestellten) übergeordneten Einheit kommunizieren.

In Fig. 2 ist ein Funk-Feldgerät 2 gemäß einer ersten Ausführungsform dargestellt. Das Funk-Feldgerät 2 ist als Sensor ausgebildet und kann beispielsweise eines der in Fig. 1 dargestellten Funk-Feldgeräte F1, F2, ..., F6 bilden. Es weist einen Messwertaufnehmer 4, eine Steuereinheit in Form eines Mikroprozessors 6, eine Batterie 8 und ein an der Batterie 8 angeschlossenes Netzteil 10 auf. Zur Messwertverarbeitung ist der Mikroprozessor 6 (in der Regel über einen Analog-Digital-Wandler und einen Verstärker) mit dem Messwertaufnehmer 4 verbunden. Die Batterie 8 bildet eine autarke Stromquelle zur Versorgung sämtlicher Systemkomponenten des Funk-Feldgerätes 2. Das Netzteil 10 transformiert die von der Batterie 8 bereitgestellte Spannung auf einen von den jeweiligen Systemkomponenten gewünschten Spannungs-wert. Die einzelnen Systemkomponenten des Funk-Feldgerätes 2 werden über das Netzteil 10 und (nicht dargestellte) Leitungen von der Batterie 8 mit elektrischer Leistung versorgt.

Zum Datenaustausch mit einer (nicht dargestellten) übergeordneten Einheit ist der Mikroprozessor 6 mit einer Funkeinheit 12 verbunden, die ein RF-Chipset und eine Antenne 14 aufweist. Die Funkeinheit 12 ist dabei derart ausgebildet, dass die drahtlose Kommunikation gemäß dem HART®-Standard erfolgt. Ferner weist das Funk-Feldgerät 2 eine drahtgebundene Kommunikationsschnittstelle 16 auf. Die drahtgebundene Kommunikationsschnittstelle 16 ist wiederum gemäß dem HART®-Standard ausgebildet. Der drahtgebundenen Kommunikationsschnittstelle 16 ist ein ASIC 18 zugeordnet, durch den das Senden und/oder Empfangen von digitalen Signalen über die drahtgebundene Kommunikationsschnittstelle 16 durchgeführt wird und der zum Datenaustausch mit dem Mikroprozessor 6 in Verbindung steht. Beim Senden von digitalen Signalen überlagert der ASIC 18 entsprechend der zu sendenden digitalen Daten (z.B. ein Bitstream einer bestimmten Länge) einem Stromsignal (4-20 mA Stromsignal) digitale Signale gemäß dem FSK (Frequency Shift Keying) Standard. Umgekehrt führt der ASIC 18 beim Empfangen von digitalen Signalen, die gemäß dem FSK Standard einem Stromsignal überlagert sind, eine Filterung durch und wandelt die erhaltenen digitalen Kommunikationssignale in digitale Daten (z.B. in einen Bitstream) um. Ferner weist der ASIC 18 eine Carrier Detect Logic (deutsch: Trägererkennungslogik) 20 als integralen Bestandteil auf.

Im Folgenden wird eine Betriebsweise des Funk-Feldgerätes 2 beschrieben. In den Zeiten, in denen von der übergeordneten Einheit keine Messwertanfrage (über die Funkeinheit 12) empfangen wird, wird das Funk-Feldgerät 2 in einem Standby-Modus betrieben. Auch der ASIC 18, der der drahtgebundenen Kommunikationsschnittstelle 16 zugeordnet ist, wird während dieser Zeiten getaktet betrieben, wobei sich hierbei jeweils aktivierte Zeiträume, in denen der ASIC 18 aktiviert ist, mit ausgeschalteten Zeiträumen, in denen der ASIC 18 ausgeschaltet ist, abwechseln. Dabei folgen die aktivierten Zeiträume und die ausgeschalteten Zeiträume periodisch aufeinander, wobei, um den Leistungsverbrauch des ASIC 18 möglichst weitgehend zu reduzieren, die aktivierten Zeiträume deutlich kürzer als die ausgeschalteten Zeiträume sind.

Erhält die Funkeinheit 12 von der übergeordneten Einheit eine Messwertanfrage, so wird das Funk-Feldgerät 2 in einen aktiven Betrieb umgeschaltet und in bekannter Weise eine entsprechende Messung durch den Messwertaufnehmer 4 durchgeführt. Der erfasste Messwert wird wiederum in bekannter Weise drahtlos über die Funkeinheit 12 an die übergeordnete Einheit übermittelt. Für die Abarbeitung solch einer Messwertanfrage ist eine Aktivierung des ASICs 18 nicht erforderlich, so dass dieser aus Energiespargründen weiter getaktet betrieben wird. Nach der Abarbeitung der Messwertanfrage wird das Funk-Feldgerät 2 wieder in den Standby-Modus umgeschaltet. Diese Umschaltung erfolgt durch den Mikroprozessor 6, der von der Funkeinheit 12 über den Abschluss des Kommunikationsvorganges benachrichtigt wird. Die drahtlose Schnittstelle des Funk-Feldgerätes 2, welcher die Funkeinheit 12 zugeordnet ist, bildet demgemäß die Hauptkommunikationsschnittstelle des Funk-Feldgerätes 2. Durch den getakteten Betrieb des ASICs 18 wird der Leistungsverbrauch für die Bereitstellung einer permanenten Verfügbarkeit der drahtgebundenen Schnittstelle 16 erheblich reduziert.

Im Folgenden wird der Fall beschrieben, in dem ein HART® Handheld Communicator 22 an die drahtgebundene Kommunikationsschnittstelle 16 angeschlossen wird, um das Funk-Feldgerät 2 vor Ort zu konfigurieren. Vor Beginn der eigentlichen Kommunikation sendet der HART® Handheld Communicator 22 zunächst ein Aufwecksignal. Dieses wird beispielsweise durch ein digitales Signal gebildet, das einen Bitstream der fortlaufenden Folge von "1" und "0" darstellt, d.h. einen Bitstream der Form "101010...". Die Länge des Aufwecksignals ist dabei länger als ein ausgeschalteter Zeitraum des ASICs 18. Nach Senden des Aufwecksignals wartet der HART® Handheld Communicator 22 eine vorbestimmte Zeit, bevor er die eigentliche Kommunikation beginnt, um sicherzustellen, dass das Funk-Feldgerät 2 empfangsbereit ist.

Die Carrier Detect Logic 20 überwacht während der Zeiten, in denen der ASIC 18 aktiviert ist, ob ein digitales Signal von dem ASIC 18 (und nicht nur Rauschen) empfangen wird. Bei Empfang des Aufwecksignals sendet die Carrier Detect Logic 20 ein DCD-Signal (engl.: Data Carrier Detected Signal; deutsch: Datenträgererkennungssignal) an den Mikroprozessor 6. Der Mikroprozessor 6 schaltet daraufhin das Funk-Feldgerät 2, das sich in der Regel in dem Standby-Modus befindet, in einen aktiven Betrieb um. Ferner wird auch der ASIC 18 in einen dauerhaft aktivierten Betrieb umgeschaltet, so dass die eigentliche Kommunikation zwischen dem Funk-Feldgerät 2 und dem HART® Handheld Communicator 22 durchgeführt werden kann. Hierzu werden von dem HART® Handheld Communicator 22 entsprechende Konfigurationsbefehle und Konfigurationsdaten als digitale Signale über die drahtgebundene Kommunikationsschnittstelle 16 an den ASIC 18 gesendet. In dem ASIC 18 werden die digitalen Signale in entsprechende digitale Daten umgewandelt und über eine serielle Kommunikation an den Mikroprozessor 6 weitergeleitet. In entsprechend umgekehrter Weise können von dem Mikroprozessor 6 Nachrichten an den HART® Handheld Communicator 22 gesendet werden. Nach Abschluss der Kommunikation zwischen dem HART® Handheld Communicator 22 und dem Funk-Feldgerät 2 wird das Funk-Feldgerät 2 zurück in den Standby-Modus geschaltet. Ferner wird der ASIC 18 wieder getaktet betrieben, so dass das gesamte Funk-Feldgerät 2 in einem energiesparenden Modus betrieben wird. Dadurch wird die Lebensdauer der Batterie 8 im Vergleich zu herkömmlich ausgebildeten Funk-Feldgeräten 2 erheblich verlängert.

Im Folgenden wird eine zweite Ausführungsform eines erfindungsgemäßen Funk-Feldgerätes 2' erläutert. Dabei werden gleiche Bauteile mit den gleichen Bezugszeichen bezeichnet. Im Folgenden wird lediglich auf die Unterschiede gegenüber der ersten Ausführungsform eingegangen.

Im Unterschied zu der ersten Ausführungsform ist bei dem Funk-Feldgerät 2' die Funktionseinheit 18', die der drahtgebundenen Kommunikationsschnittstelle 16 zugeordnet ist, nicht als separate Schaltung ausgebildet. Vielmehr ist die Funktionseinheit 18' in den Mikroprozessor 6' des Funk-Feldgerätes 2' integriert. Die von der Funktionseinheit 18' ausgeübte Funktion entspricht jedoch weitgehend der Funktion, wie sie in Bezug auf den ASIC 18 erläutert wurde. Wird von der Carrier Detect Logic 20, die integral in der Funktionseinheit 18' ausgebildet ist, ein digitales Signal erfasst, so entfällt bei der vorliegenden zweiten Ausführungsform der Schritt, dass von der Carrier Detect Logic 20 ein DCD-Signal an den Mikroprozessor 6' gesendet werden muss. Vielmehr werden direkt bei Erfassen solch eines digitalen Signals das Funk-Feldgerät 2' in den aktiven Betrieb umgeschaltet und die Funktionseinheit 18' wird dauerhaft aktiviert. Auch die in Bezug auf die erste Ausführungsform erläuterte serielle Kommunikation zwischen der Funktionseinheit 18' und dem Mikroprozessor 6' entfällt. Im Unterschied zu der ersten Ausführungsform sind folglich das DCD-Signal und die serielle Kommunikation in Software realisiert.

Im Folgenden wird eine weitere Ausführungsform der vorliegenden Erfindung erläutert. Dabei werden gleiche Bauteile mit den gleichen Bezugszeichen bezeichnet. Im Folgenden wird lediglich auf die Unterschiede gegenüber der ersten Ausführungsform eingegangen.

Ein herkömmlich ausgebildetes Feldgerät 24, das einen Sensor bildet, weist einen Messwertaufnehmer 4 und einen Mikroprozessor 6, die miteinander in Kommunikationsverbindung stehen, auf. Ferner weist das Feldgerät 24 eine mit dem Mikroprozessor 6 in Verbindung stehende drahtgebundene Kommunikationsschnittstelle 26 auf, der eine Funktionseinheit 28, die das Senden und/oder Empfangen von digitalen Signalen über die drahtgebundene Kommunikationsschnittstelle 26 durchführt, zugeordnet ist. Die Funktionseinheit 28 wird durch einen ASIC gebildet. Die drahtgebundene Kommunikationsschnittstelle 26 und die Funktionseinheit 28 sind gemäß dem HART®-Standard ausgebildet.

Über die drahtgebundene Kommunikationsschnittstelle 26 kann das Feldgerät 24 beispielsweise an ein HART®-Bussystem angeschlossen werden und mit einer übergeordneten Einheit kommunizieren. Das Feldgerät 24 ist als 2-Leiter-Gerät ausgebildet. Demgemäß erfolgt sowohl die Kommunikation als auch die Stromversorgung über eine gemeinsame 2-Leiter-Verbindung, die zumindest teilweise durch die drahtgebundene Kommunikationsschnittstelle 26 gebildet wird. Ferner kann an der drahtgebundenen Kommunikationsschnittstelle 26 ein Wireless Adapter 30 angeschlossen werden, wie in Fig. 4 dargestellt ist. Dadurch kann das herkömmliche Feldgerät 24 zu einem "Funk-Feldgerät" aufgerüstet werden, wie nachfolgend im Detail erläutert wird.

Der Wireless Adapter 30 weist einen Mikroprozessor 32 auf. Zum Datenaustausch mit einer (nicht dargestellten) übergeordneten Einheit ist der Mikroprozessor 32 mit einer Funkeinheit 34 verbunden, die ein RF-Chipset und eine Antenne 36 aufweist. Die Funkeinheit 34 ist dabei derart ausgebildet, dass die drahtlose Kommunikation gemäß dem HART®-Standard erfolgt. Ferner weist der Wireless Adapter 30 eine mit dem Mikroprozessor 32 verbundene drahtgebundene Kommunikationsschnittstelle 38 auf, der eine Funktionseinheit 40, die das Senden und/oder Empfangen von digitalen Signalen über die drahtgebundene Kommunikationsschnittstelle 38 durchführt, zugeordnet ist. Die Funktionseinheit 40 wird durch einen ASIC gebildet. Die drahtgebundene Kommunikationsschnittstelle 38 und die Funktionseinheit 40 sind gemäß dem HART®-Standard ausgebildet. Bei der in Fig. 4 dargestellten Anordnung werden die drahtgebundene Kommunikationsschnittstelle 26 des Feldgerätes 24 und die drahtgebundene Kommunikationsschnittstelle 38 des Wireless Adapters 30 über eine 2-Leiter-Verbindungsleitung 42 miteinander verbunden. Über diese Verbindung erfolgt sowohl die Kommunikation (gemäß dem HART®-Standard) als auch die Stromversorgung des Feldgerätes 24.

Zur Bereitstellung der Stromversorgung des Feldgerätes 24 (und des Wireless Adapters 30) weist der Wireless Adapter 30 eine Adapter-Batterie 44 und ein an der Adapter-Batterie 44 angeschlossenes Adapter-Netzteil 46 auf. Die Adapter-Batterie 44 bildet eine autarke Stromquelle zur Versorgung sämtlicher Systemkomponenten des Wireless Adapters 30 und des daran angeschlossenen Feldgerätes 24. Die einzelnen Systemkomponenten des Wireless Adapters 30 werden über das Adapter-Netzteil 46 und (nicht dargestellte) Leitungen von der Adapter-Batterie 44 mit elektrischer Leistung versorgt. Das Adapter-Netzteil 46 ist ferner an der drahtgebundenen Kommunikationsschnittstelle 38 des Wireless Adapters 30 angeschlossen, so dass die Systemkomponenten des Feldgerätes 24 über die 2-Leiter-Verbindungsleitung 42, die drahtgebundene Kommunikationsschnittstelle 26 des Feldgerätes 24 und ein daran angeschlossenes Feldgerät-Netzteil 48 mit elektrischer Leistung versorgt werden. In den einzelnen Netzteilen 46 und 48 des Feldgerätes 24 und des Wireless Adapters 30 wird dabei, wie in dem Fachgebiet bekannt ist, eine Spannungstransformation durchgeführt, um zum einen jeweils die von den direkt versorgten Systemkomponenten gewünschten Spannungswerte bereitzustellen und um zum anderen an der 2-Leiter-Verbindungsleitung eine derart hohe Spannung, dass das Feldgerät 24 mit ausreichend elektrischer Leistung versorgt wird, bereitzustellen. Dabei können die einzelnen Netzteile 46 und 48 (sowie gleichermaßen das Netzteil 10 der Figuren 2 und 3) auch in mehrere Netzteilstufen unterteilt sein.

Der Wireless Adapter 30 weist eine weitere drahtgebundene Kommunikationsschnittstelle 50 auf. Die weitere drahtgebundene Kommunikationsschnittstelle 50 ist gemäß dem HART®-Standard ausgebildet. Der weiteren drahtgebundenen Kommunikationsschnittstelle 50 ist ein ASIC 52 zugeordnet, durch den das Senden und/oder Empfangen von digitalen Signalen über die drahtgebundene Kommunikationsschnittstelle 50 durchgeführt wird und der zum Datenaustausch mit dem Mikroprozessor 32 in Verbindung steht. Das Senden und Empfangen von digitalen Signalen erfolgt in entsprechender Weise, wie es oberhalb in Bezug auf den ASIC 18 der Fig. 2 erläutert wurde. Ferner weist der ASIC 52 eine Carrier Detect Logic (deutsch: Trägererkennungslogik) 54 als integralen Bestandteil auf.

Im Folgenden wird eine Betriebsweise der Anordnung beschrieben. Das Feldgerät 24 und der Wireless Adapter 30 kommunizieren über die drahtgebundenen Kommunikationsschnittstellen 26, 38 und die 2-Leiter-Verbindungsleitung 42 gemäß dem HART®-Standard. Der Wireless Adapter 30 wiederum kommuniziert gemäß dem HART®-Standard drahtlos über die Funkeinheit 34 mit einer (nicht dargestellten) übergeordneten Einheit. In den Zeiten, in denen von der übergeordneten Einheit keine Messwertanfrage (über die Funkeinheit 34) empfangen wird, werden das Feldgerät 24 und der Wireless Adapter 30 in einem Standby-Modus betrieben. Die Funktionseinheiten 28 und 40, die den beiden drahtgebundenen Kommunikationsschnittstellen 26, 38 zugeordnet sind, sind dauerhaft aktiviert.

Erhält die Funkeinheit 34 von der übergeordneten Einheit eine Messwertanfrage, so wird der Wireless Adapter 30 in einen aktiven Betrieb umgeschaltet. Ferner wird die Messwertanfrage über die 2-Leiter-Verbindungsleitung 42 an das Feldgerät 24 weitergeleitet. Das Feldgerät 24 wird ebenfalls in den aktiven Betrieb umgeschaltet und es führt in bekannter Weise eine entsprechende Messung durch den Messwertaufnehmer 4 durch. Der erfasste Messwert wird über die 2-Leiter-Verbindungsleitung an den Wireless Adapter 30 und von dort über die Funkeinheit 34 in bekannter Weise drahtlos an die übergeordnete Einheit übermittelt. Für die Abarbeitung solch einer Messwertanfrage ist eine Aktivierung des ASICs 52 nicht erforderlich, so dass dieser aus Energiespargründen weiter getaktet betrieben wird. Nach der Abarbeitung der Messwertanfrage werden das Feldgerät 24 und der Wireless Adapter 30 wieder in den Standby-Modus umgeschaltet.

Wird an der weiteren drahtgebundenen Kommunikationsschnittstelle 50 des Wireless Adapters 30 ein HART® Handheld Communicator 56 angeschlossen, um den Wireless Adapter 30 vor Ort zu konfigurieren, so sendet der HART® Handheld Communicator 56 wiederum zunächst ein Aufwecksignal. Die Erkennung des Aufwecksignals, die Umschaltung des Wireless Adapters 30 in einen aktiven Betrieb, die dauerhafte Aktivierung des ASICs 52 sowie die Durchführung der Konfigurierung erfolgt dabei in entsprechender Weise, wie dies in Bezug auf Fig. 2 bei dem Anschluss des HART® Handheld Communicators 22 erläutert wurde. Nach Abschluss der Kommunikation zwischen dem HART® Handheld Communicator 56 und dem Wireless Adapter 30 wird der Wireless Adapter 30 zurück in den Standby-Modus geschaltet. Ferner wird der ASIC 52 wieder getaktet betrieben.

Die vorliegende Erfindung ist nicht auf die in den Figuren dargestellten Ausführungsbeispiele beschränkt. Beispielsweise kann/können bei der Anordnung auch eine oder beide der Funktionseinheiten 28 und 40, die den beiden drahtgebundenen Kommunikationsschnittstellen 26 und 38 zugeordnet sind, in einem getakteten Betrieb betrieben werden und jeweils eine Carrier Detect Logic aufweisen, so wie dies oberhalb in Bezug auf den in Fig. 2 dargestellten ASIC 18 erläutert wurde. Dadurch kann in einem Standby-Modus des Feldgerätes 24 und/oder des Wireless Adapters 30 der Leistungsverbrauch weiter gesenkt werden. Je nachdem, von welcher Seite eine Kommunikation über die 2-Leiter-Verbindungs-leitung 42 initiiert wird, kann die jeweilige Funktionseinheit 28 und/oder 40 durch ein entsprechendes Aufwecksignal von dieser Seite in einen dauerhaft aktivierten Betrieb umgeschaltet werden.

Ferner besteht die Möglichkeit, auch bei einem herkömmlichen Feldgerät, das nicht als Funk-Feldgerät ausgebildet ist, eine Funktionseinheit einer drahtgebundenen Feldbus-Kommuni-kationsschnittstelle, über die das Feldgerät an einem (drahtgebundenen) Feldbus angeschlossen ist, in einem getakteten Betrieb zu betreiben. Dadurch können der Leistungsverbrauch des Feldgerätes reduziert und Kosten eingespart werden.

An Stelle der erläuterten Carrier Detect Logic kann auch ein anderer Mechanismus eingesetzt werden, um zu erkennen, ob eine Kommunikation über die drahtgebundene Kommunikationsschnittstelle durchzuführen ist. Insbesondere dann, wenn über die drahtgebundene Kommunikationsschnittstelle nicht die Kommunikation zu dem Feldbus abgewickelt wird, kann an dieser beispielsweise ein Schalter vorgesehen sein, der durch Anschluss eines externen Gerätes (z.B. eines Handheld Communicators) aktiviert wird. Die Aktivierung des Schalters kann beispielsweise mechanisch, optisch, elektrisch oder magnetisch erfolgen. Nach Aktivierung des Schalters wird wiederum die Funktionseinheit, die der drahtgebundenen Kommunikationsschnittstelle zugeordnet ist, in einen dauerhaft aktivierten Betrieb umgeschaltet.

## Patentansprüche

1. Feldgerät der Prozessautomatisierungstechnik, insbesondere ein Sensor, ein Aktor und/oder ein Wireless Adapter, mit einer drahtgebundenen Kommunikationsschnittstelle (16; 26; 38; 50) und mit einer der Kommunikationsschnittstelle (16; 26; 38; 50) zugeordneten Funktionseinheit (18; 18'; 28; 40; 52), die derart ausgebildet ist, dass sie das Senden und/oder Empfangen von digitalen Signalen über die Kommunikationsschnittstelle (16; 26; 38; 50) durchführt,
**dadurch gekennzeichnet,**
**dass** das Feldgerät (2; 2'; 24; 30) derart ausgebildet ist, dass die Funktionseinheit (18; 18'; 28; 40; 52) getaktet betreibbar ist, wobei sich in dem getakteten Betrieb jeweils aktivierte Zeiträume, in denen die Funktionseinheit (18; 18'; 28; 40; 52) aktiviert ist, mit ausgeschalteten Zeiträumen, in denen die Funktionseinheit (18; 18'; 28; 40; 52) ausgeschaltet ist, abwechseln, und
**dass** die Funktionseinheit (18; 18'; 52) eine Carrier Detect Logic (20; 54) aufweist, durch welche vor Durchführung einer Kommunikation ein vorbestimmtes, von einem an der Kommunikationsschnittstelle (16; 26; 38; 50) angeschlossenem Gerät (22; 56) gesendetes und an der Kommunikationsschnittstelle (16; 50) ankommendes Aufwecksignal einer Länge, die länger als ein ausgeschalteter Zeitraum der Funktionseinheit (18; 18'; 28; 40; 52) ist erfassbar ist,
wobei die Funktionseinheit während der aktivierten Zeiträume digitale Signale empfängt, bzw. sendet, so dass die Funktionseinheit während der aktivierten Zeiträume für eine Kommunikation über die Kommunikationsschnittstelle verfügbar ist, und
wobei die Funktionseinheit dazu dient, das Feldgerät in einen aktiven Betrieb umzuschalten, wenn an der Funktionseinheit das Aufwecksignal erkannt wird.

2. Feldgerät gemäß Anspruch 1, **dadurch gekennzeichnet, dass** die Kommunikationsschnittstelle (16; 26; 38; 50) durch eine Feldbus-Kommunikationsschnittstelle gebildet wird, wobei sie vorzugsweise gemäß dem Profibus®-Standard, dem Foundation®-Fieldbus-Standard oder gemäß dem HART®-Standard ausgebildet ist.

3. Feldgerät gemäß Anspruch 1 oder 2, **dadurch gekennzeichnet, dass** an der Kommunikationsschnittstelle (16; 50) eine Service- und/oder Bedieneinheit (22; 56) anschließbar ist und zwischen der Service- und/oder Bedieneinheit (22; 56) und dem Feldgerät (2; 2'; 24; 30) über die Kommunikationsschnittstelle (16; 50) eine Kommunikation durchführbar ist.

4. Feldgerät gemäß einem der vorangehenden Ansprüche, **dadurch gekennzeichnet, dass** die Funktionseinheit (18; 18'; 28; 40; 52) auf den Schichten 1 und 2 des OSI-Referenzmodells, vorzugsweise ausschließlich auf der Schicht 1 des OSI-Referenzmodells, implementiert ist.

5. Feldgerät gemäß einem der vorangehenden Ansprüche, **dadurch gekennzeichnet, dass** die Funktionseinheit durch einen ASIC (18; 18'; 28; 40; 52), durch eine FPGA oder durch eine FPLA gebildet wird.

6. Feldgerät gemäß einem der vorangehenden Ansprüche, **dadurch gekennzeichnet, dass** das Feldgerät (2; 2'; 30) zusätzlich eine drahtlose Feldbus-Kommunikationsschnittstelle aufweist, wobei die drahtlose Feldbus-Kommunikationsschnittstelle vorzugsweise gemäß dem Profibus®-Standard, dem Foundation®-Fieldbus-Standard oder gemäß dem HART®-Standard ausgebildet ist.

7. Feldgerät gemäß einem der vorangehenden Ansprüche, **dadurch gekennzeichnet, dass** das Feldgerät (2; 2'; 24; 30) eine autarke Stromquelle (8; 44) zur Versorgung des Feldgerätes (2; 2'; 24; 30) aufweist.

8. Verfahren zum Betreiben eines Feldgerätes (2; 2'; 24; 30) der Prozessautomatisierungstechnik, insbesondere eines Sensors (2; 2'; 24), eines Aktors und/oder eines Wireless Adapters (30), wobei das Feldgerät (2; 2'; 24; 30) eine drahtgebundene Kommunikationsschnittstelle (16; 26; 38; 50) und eine der Kommunikationsschnittstelle (16; 26; 38; 50) zugeordnete Funktionseinheit (18; 18'; 28; 40; 52) aufweist, wobei durch die Funktionseinheit (18; 18'; 28; 40; 52) das Senden und/oder Empfangen von digitalen Signalen über die Kommunikationsschnittstelle (16; 26; 38; 50) durchgeführt wird, **dadurch gekennzeichnet, dass** die Funktionseinheit (18; 18'; 28; 40; 52) in einem getakteten Betrieb betrieben wird, wobei sich in dem getakteten Betrieb jeweils aktivierte Zeiträume, in denen die Funktionseinheit (18; 18'; 28; 40; 52) aktiviert ist, mit ausgeschalteten Zeiträumen, in denen die Funktionseinheit (18; 18'; 28; 40; 52) ausgeschaltet ist, abwechseln,
wobei während der aktivierten Zeiträume digitale Signale von der Funktionseinheit empfangen, bzw. empfangen und gesendet werden, so dass die Funktionseinheit während der aktivierten Zeiträume für eine Kommunikation über die Kommunikationsschnittstelle verfügbar ist,
wobei ein an der Kommunikationsschnittstelle (16; 26; 38; 50) angeschlossenes Gerät (22; 56) vor Durchführung einer Kommunikation ein vorbestimmtes Aufwecksignal einer Länge, die länger als ein ausgeschalteter Zeitraum der Funktionseinheit (18; 18'; 28; 40; 52) ist, sendet,
wobei das an der Kommunikationsschnittstelle (16; 50) ankommendes Aufwecksignal durch eine Carrier Detect Logic (20; 54) der Funktionseinheit (18; 18'; 52) erfassbar ist, und
wobei das Feldgerät in einen aktiven Betrieb umgeschaltet wird, wenn an der Funktionseinheit das Aufwecksignal erkannt wird.

9. Verfahren gemäß Anspruch 8, **dadurch gekennzeichnet, dass** die aktivierten Zeiträume und die ausgeschalteten Zeiträume periodisch aufeinander folgen, wobei die aktivierten Zeiträume vorzugsweise kürzer als die ausgeschalteten Zeiträume sind.

10. Verfahren gemäß Anspruch 8 oder 9, **dadurch gekennzeichnet, dass** die Funktionseinheit (18; 18'; 28; 40; 52) zumindest dann in dem getakteten Betrieb betrieben wird, wenn das Feldgerät (2; 2'; 24; 30) in einem Standby-Modus betrieben wird.

11. Verfahren gemäß Anspruch 10, **dadurch gekennzeichnet, dass** dann, wenn an der Funktionseinheit (18; 18'; 28; 40; 52) ein digitales Signal erkannt wird, das Feldgerät (2; 2'; 24; 30) in einen aktiven Betrieb umgeschaltet wird und die Funktionseinheit (18; 18'; 28; 40; 52) dauerhaft aktiviert wird.

12. Verfahren gemäß einem der Ansprüche 8 bis 11, **dadurch gekennzeichnet, dass** das Feldgerät (2; 2'; 24; 30) über eine drahtlose Verbindung, vorzugsweise über Funk, mit einer übergeordneten Einheit kommuniziert.

13. Verfahren gemäß einem der Ansprüche 8 bis 12, **dadurch gekennzeichnet, dass** das Feldgerät (2; 2'; 24; 30) autark mit elektrischer Leistung versorgt wird.

## Claims

1. Field device for process automation technology, particularly a sensor, an actuator and/or a wireless adapter, with a wired communication interface (16, 26, 38, 50) and with a function unit (18, 18', 28, 40, 52) assigned to the communication interface (16, 26, 38, 50), said function unit being designed in such a way that it transmits and/or receives digital signals via the communication interface (16, 26, 38, 50),
**characterized in that**
the field device (2, 2', 24, 30) is designed in such a way that the function unit (18, 18', 28, 40, 52) can be operated in clocked cycles, wherein in the clocked mode activated periods in which the function unit (18, 18', 28, 40, 52) is activated alternate with deactivated periods in which the function unit (18, 18', 28, 40, 52) is deactivated, and
**in that** the function unit (18, 18', 52) features a carrier detect logic (20, 54) which allows the detection - before communication is performed - of a predefined wake-up signal which is sent by a device (22, 56) that is connected to the communication interface (16, 26, 38, 50) and arrives at the communication interface (16, 50), said signal being of a length which is longer than a deactivated period of the function unit (18, 18', 28, 40, 52),
wherein the function unit receives and/or transmits digital signals during the activated periods in such a way that the function unit is available during the activated periods for communication via the communication interface, and wherein the function unit is used to switch the field device to active mode when the wake-up signal is detected at the function unit.

2. Field device as claimed in Claim 1, **characterized in that** the communication interface (16, 26, 38, 50) is formed by a fieldbus communication interface, said interface being preferably designed according to the Profibus® standard, the Foundation Fieldbus® standard or the HART@ standard.

3. Field device as claimed in Claim 1 or 2, **characterized in that** a service and/or operating unit (22, 56) can be connected to the communication interface (16, 50), and communication can take place between the service unit and/or operating unit (22, 56) and the field device (2, 2', 24, 30) via the communication interface (16, 50).

4. Field device as claimed in one of the previous claims, **characterized in that** the function unit (18, 18', 28, 40, 52) is implemented on layers 1 and 2 of the OSI reference model, preferably exclusively on layer 1 of the OSI reference model.

5. Field device as claimed in one of the previous claims, **characterized in that** the function unit (18, 18', 28, 40, 52) is formed by an ASIC, an FPGA or an FPLA.

6. Field device as claimed in one of the previous claims, **characterized in that** the field device (2, 2', 30) also has a wireless fieldbus communication interface, wherein the wireless fieldbus communication interface is preferably designed according to the Profibus® standard, the Foundation Fieldbus® standard or the HART@ standard.

7. Field device as claimed in one of the previous claims, **characterized in that** the field device (2, 2', 24, 30) has an autonomous current source (8, 44) designed to power the field device (2, 2', 24, 30).

8. Procedure for operating a field device (2, 2', 24, 30) used in process automation technology, particularly a sensor (2, 2', 24), an actuator and/or a wireless adapter (30), wherein the field device (2, 2', 24, 30) has a wired communication interface (16, 26, 38, 50) and a function unit (18, 18', 28, 40, 52) assigned to the communication interface (16, 26, 38, 50), wherein the function unit (18, 18', 28, 40, 52) transmits and/or receives digital signals via the communication interface (16, 26, 38, 50), **characterized in that**
the field unit (18, 18', 28, 40, 52) is operated in a clocked mode, wherein in the clocked mode activated periods in which the function unit (18, 18', 28, 40, 52) is activated alternate with deactivated periods in which the function unit (18, 18', 28, 40, 52) is deactivated,
wherein during the activated periods digital signals are received, or received and sent, by the function unit such that the function unit is available for communication via the communication interface during the activated periods,
wherein - before communication is performed - a device (22, 56) which is connected to the communication interface (16, 26, 38, 50) sends a predefined wake-up signal of a length which is longer than a deactivated period of the function unit (18, 18', 28, 40, 52),
wherein the wake-up signal arriving at the communication interface (16, 50) can be detected by a carrier detect logic (20, 54) of the function unit (18, 18', 52), and wherein the field device is switched to an active mode when the wake-up signal is detected at the function unit.

9. Procedure as claimed in Claim 8, **characterized in that** the activated periods and the deactivated periods follow one another periodically, wherein the activated periods are preferably shorter than the deactivated periods.

10. Procedure as claimed in Claim 8 or 9, **characterized in that** the function unit (18, 18', 28, 40, 52) is at least operated in the clocked mode when the field device (2, 2', 24, 30) is operated in a stand-by mode.

11. Procedure as claimed in Claim 10, **characterized in that** if a digital signal is detected at the function unit (18, 18', 28, 40, 52), the field device (2, 2', 24, 30) is switched to an active mode and the function unit (18, 18', 28, 40, 52) is activated permanently.

12. Procedure as claimed in one of the Claims 8 to 11, **characterized in that** the field device (2, 2', 24, 30) communicates with a higher-level unit via a wireless connection, preferably via radio.

13. Procedure as claimed in one of the Claims 8 to 12, **characterized in that** the field device (2, 2', 24, 30) is autonomously supplied with electrical energy.

## Revendications

1. Appareil de terrain de la technique d'automatisation des process, notamment un capteur, un actionneur et/ou un adaptateur sans fil, avec une interface de communication (16, 26, 38, 50) filaire et avec une unité fonctionnelle (18, 18', 28, 40, 52) attribuée à l'interface de communication (16, 26, 38, 50), laquelle unité est conçue de telle sorte à exécuter l'émission et/ou la réception de signaux numériques via l'interface de communication (16, 26, 38, 50),
**caractérisé**
**en ce que** l'appareil de terrain (2, 2', 24, 30) est conçu de telle sorte que l'unité fonctionnelle (18, 18', 28, 40, 52) puisse être exploitée de façon cyclique, pour laquelle, dans le mode de fonctionnement cyclique, différentes périodes activées, au sein desquelles l'unité fonctionnelle (18, 18', 28, 40, 52) est activée, se succèdent à des périodes désactivées, au sein desquelles l'unité fonctionnelle (18, 18', 28, 40, 52) est désactivée, et
**en ce que** l'unité fonctionnelle (18, 18', 52) comporte une logique de détection de porteuse (20, 54), laquelle permet de détecter, avant l'exécution d'une communication, un signal de réveil prédéfini, émis par un appareil (22, 56) raccordé à l'interface de communication (16, 26, 38, 50) et parvenant à l'interface de communication (16, 50), signal dont la longueur est supérieure à une période désactivée de l'unité fonctionnelle (18, 18', 28, 40, 52),
l'unité fonctionnelle recevant ou émettant pendant les périodes activées des signaux numériques, si bien que l'unité fonctionnelle est disponible, pendant les périodes activées, pour une communication via l'interface de communication, et l'unité fonctionnelle servant à commuter l'appareil de terrain dans un mode de fonctionnement actif lorsque le signal de réveil est détecté sur l'unité fonctionnelle.

2. Appareil de terrain selon la revendication 1, **caractérisé en ce que** l'interface de communication (16, 26, 38, 50) est constituée d'une interface de communication de bus de terrain, l'interface étant conçue de préférence conformément au standard Profibus®, au standard Foundation Fieldbus® ou au standard HART@.

3. Appareil de terrain selon la revendication 1 ou 2, **caractérisé en ce qu'**une unité de service et/ou d'exploitation (22, 56) peut être raccordée à l'interface de communication (16, 50), et **en ce qu'**une communication peut être réalisée entre l'unité de service et/ou d'exploitation (22, 56) et l'appareil de terrain (2, 2', 24, 30) via l'interface de communication (16, 50).

4. Appareil de terrain selon l'une des revendications précédentes, **caractérisé en ce que** l'unité fonctionnelle (18, 18', 28, 40, 52) est implémentée sur les couches 1 et 2 du modèle de référence OSI, de préférence exclusivement sur la couche 1 du modèle de référence OSI.

5. Appareil de terrain selon l'une des revendications précédentes, **caractérisé en ce que** l'unité fonctionnelle (18, 18', 28, 40, 52) est constituée d'un circuit ASIC, d'un circuit FPGA ou d'un circuit FPLA.

6. Appareil de terrain selon l'une des revendications précédentes, **caractérisé en ce que** l'appareil de terrain (2, 2', 30) comporte en outre une interface de communication de bus de terrain sans fil, l'interface de communication de bus de terrain sans fil étant conçue de préférence conformément au standard Profibus®, au standard Foundation Fieldbus® ou au standard HART@

7. Appareil de terrain selon l'une des revendications précédentes, **caractérisé en ce que** l'appareil de terrain (2, 2', 24, 30) comporte une source de courant (8, 44) destinée à alimenter l'appareil de terrain (2, 2', 24, 30).

8. Procédé destiné à l'exploitation d'un appareil de terrain (2, 2', 24, 30) de la technique d'automatisation des process, notamment un capteur (2, 2', 24), un actionneur et/ou un adaptateur sans fil (30), l'appareil de terrain (2, 2', 24, 30) comportant une interface de communication (16, 26, 38, 50) filaire et une unité fonctionnelle (18, 18', 28, 40, 52) attribuée à l'interface de communication (16, 26, 38, 50), l'émission et/ou la réception de signaux numériques étant réalisés via l'interface de communication (16, 26, 38, 50),
**caractérisé**
**en ce que** l'unité fonctionnelle (18, 18', 28, 40, 52) est exploitée dans un mode de fonctionnement cyclique, et en ce que, dans le mode de fonctionnement cyclique, différentes périodes activées, au sein desquelles l'unité fonctionnelle (18, 18', 28, 40, 52) est activée, se succèdent à des périodes désactivées, au sein desquelles l'unité fonctionnelle (18, 18', 28, 40, 52) est désactivée,
procédé pour lequel des signaux numériques sont reçus, ou reçus et envoyés, par l'unité fonctionnelle pendant les périodes activées, si bien que l'unité fonctionnelle est disponible, pendant les périodes activées, pour une communication via l'interface de communication,
procédé pour lequel un appareil (22, 56) raccordé à l'interface de communication (16, 26, 38, 50) émet, avant la réalisation d'une communication, un signal de réveil prédéfini dont la longueur est supérieure à une période désactivée de l'unité fonctionnelle (18, 18', 28, 40, 52),
procédé pour lequel le signal de réveil parvenant à l'interface de communication (16, 50) peut être détecté par une logique de détection de porteuse (20, 54) de l'unité fonctionnelle (18, 18', 52), et
procédé pour lequel l'appareil de terrain est commuté dans un mode de fonctionnement actif lorsque le signal de réveil est détecté sur l'unité fonctionnelle.

9. Procédé selon la revendication 8, **caractérisé en ce que** les périodes activées et les périodes désactivées se succèdent périodiquement, les périodes activées étant de préférence plus courtes que les périodes désactivées.

10. Procédé selon la revendication 8 ou 9, **caractérisé en ce que** l'unité fonctionnelle (18, 18', 28, 40, 52) est exploitée en mode de fonctionnement cyclique au minimum lorsque l'appareil de terrain (2, 2', 24, 30) est utilisé dans un mode de veille.

11. Procédé selon la revendication 10, **caractérisé en ce qu'**en cas de détection d'un signal numérique sur l'unité fonctionnelle (18, 18', 28, 40, 52), l'appareil de terrain (2, 2', 24, 30) est commuté dans un mode de fonctionnement actif et l'unité fonctionnelle (18, 18', 28, 40, 52) est activée en permanence.

12. Procédé selon l'une des revendications 8 à 11, **caractérisé en ce que** l'appareil de terrain (2, 2', 24, 30) communique avec une unité maître via une liaison sans fil, de préférence via une liaison radio.

13. Procédé selon l'une des revendications 8 à 12, **caractérisé en ce que** l'appareil de terrain (2, 2', 24, 30) est alimenté de façon autonome en énergie électrique.
